# EUROPÄISCHE PATENTSCHRIFT

(11) **EP 3 616 803 B1**
(45) Veröffentlichungstag und Bekanntmachung des Hinweises auf die Patenterteilung: **13.04.2022**
(21) Anmeldenummer: 19194505.4
(22) Anmeldetag: 30.08.2019
(51) Int. Cl.: B21C 47/00, B21C 47/34, B65H 23/14

(54) **BREMSVORRICHTUNG UND VERFAHREN ZUM BETREIBEN EINER BREMSVORRICHTUNG**
BRAKE DEVICE AND METHOD FOR OPERATING SAME
DISPOSITIF DE FREINAGE ET PROCÉDÉ DE FONCTIONNEMENT D'UN DISPOSITIF DE FREINAGE

(30) Priorität: 31.08.2018 DE 102018214862
(43) Veröffentlichungstag der Anmeldung: 04.03.2020
(73) Patentinhaber: Felix Waldner GmbH, 4020 Linz (AT)
(72) Erfinder: WAGNER, Hugo Maximilian, A-4320 Perg (AT); SANDNER, Thomas, A-4271 St. Oswald bei Freistadt (AT)
(74) Vertreter: Isarpatent

(56) Entgegenhaltungen:
- CH-A- 436 184
- CH-A- 513 765
- GB-A- 1 296 016
- GB-A- 2 148 160

## Beschreibung

Die Erfindung betrifft eine Bremsvorrichtung zum Abbremsen eines aufzuwickelnden, längsförmigen Mediums. Die Erfindung betrifft des Weiteren ein Verfahren zum Betreiben einer Bremsvorrichtung zum Abbremsen eines aufzuwickelnden, längsförmigen Mediums.

### Stand der Technik

Herkömmlicherweise werden große Stahlblechrollen auf einer Spaltbandanlage abgerollt und in der Länge auf schmälere Blechstreifen zugeschnitten. Diese werden nach dem Schneiden wieder auf einer Wickelhaspel aufgerollt. Beim Wickeln kann je nach Blechdicke jedoch ein Versatz in Axialrichtung der Stahlblechrolle auftreten.

Dies ist in Bezug auf eine Weiterverarbeitung der Stahlblechrollen bei nachgelagerten Arbeitsprozessen von Nachteil, da die Weiterverarbeitung hierdurch erschwert wird.

Die Problematik des Auftretens eines Versatzes bzw. Wickelfehlers entsteht dadurch, dass die Spaltbandanlage ursprünglich für dünneres Material ausgelegt worden ist, jedoch mit der Zeit Stück für Stück aufgerüstet wurde, um dickere Blechdicke verarbeiten bzw. schneiden zu können.

Die zum Wickeln der Coils erforderliche Bandbremse, welche vor einer Aufwickelhaspel angeordnet ist, wurde herkömmlicherweise jedoch bislang nicht an die größeren Blechdicken angepasst. Durch die zu geringe Bremsleistung treten somit immer wieder Wickelfehler bei größeren Blechdicken auf.

DE 40 01 787 C1 offenbart ein Verfahren zum gleichzeitigen Aufwickeln mehrerer durch Längsteilen eines breiten Metallbandes gebildeter, voneinander getrennter

Stahlbänder auf einem gemeinsamen, im Durchmesser spreizbaren Aufwickeldorn, wobei zunächst die Bandanfänge aller gleichzeitig aufzuwickelnder Spaltbänder mit vorbestimmten gegenseitigen axialen Abständen auf den Aufwickeldorn festgelegt werden.

Dann werden durch Drehung desselben die Spaltbänder unter Zug in mehr als einer Anfangswindung auf den gespreizten Aufwickeldorn aufgewickelt und zwei radial übereinanderliegende Anfangswindungen des jeweiligen Spaltbandes tangentialschubfest miteinander verbunden, um damit aus den Anfangswindungen jedes Spaltbandes eine in sich geschlossene Hülse zu bilden.

DE 20 2015 105 036 U1 offenbart eine Haltevorrichtung für Rollen, umfassend einen flächigen Tragegurt zum Umfassen eines Umfangs zumindest einer Rolle und zwei drehbare Walzen, wobei die Enden des Tragegurts an den Walzen befestigt sind, sodass bei einer Drehung mindestens einer der Walzen der Tragegurt mindestens zum Teil auf einer Walze aufgerollt wird.

Bei vorstehend genannten herkömmlichen Lösungen kann jedoch in nachteilhafter Weise ein Versatz in Axialrichtung der Stahlblechrolle beim Wickeln auf die Aufwickelhaspel auftreten.

Des Weiteren sind gattungsgemäße Bandbremsvorrichtungen in der Regel derart ausgebildet, dass das Abbremsen des bandförmigen Materials durch Andrücken einer Backenbremse durch die Bandbremsvorrichtung auf das bandförmige Material bewirkt wird. Dies hat u.a. den Nachteil, dass im Falle einer Ansammlung von Staub oder beispielsweise Metallspänen, die beim Spalten der Rolle auftreten können, in nachteilhafter Weise durch die Backenbremse in das bandförmige Material einpressbar sind und somit zu Kratzern und Beschädigungen des bandförmigen Materials führen können. Zum anderen ist das Abbremsen des Materials über die herkömmliche Backenbremse energieaufwendig.

Die GB 2 148 160 A offenbart ein Bremsqerüst für länqsqeteilte Blechbänder, wobei jeweils zwei drehbar gelagerte Bremsrollen, zwischen denen das Blechband durchführbar ist, durch einen Generator gebremst werden. Die Bremsrollen sind über Gelenkwellen an ein Getriebe gekoppelt und über das Getriebe mit dem Generator verbunden. Die CH 513 765 A beschreibt eine Vorrichtung zur Aufrechterhaltung der Zugspannung in band- oder drahtförmigen, die Strecke zwischen zwei Transportrollen durchlaufendem Material. Die CH 436 184 A offenbart eine Richtmaschine zum Richten von Normalblechen und Keilblechen. Die GB 1 296 016 A beschreibt eine Vorrichtung zum Bremsen eines auf einen Haspelkern aufzuwickelnden Blechbandes.

Die GB 2 148 160 A bildet die Basis für den Oberbegriff des Anspruchs 1.

### Offenbarung der Erfindung

Die Aufgabe der vorliegenden Erfindung ist es daher, eine Bremsvorrichtung zum Abbremsen eines aufzuwickelnden, längsförmigen Mediums vorzusehen, welche eine fehlerfreie Wicklung des bandförmigen Materials verschiedener Materialdicken ermöglicht und welche energieeffizient betreibbar ist.

Die Aufgabe wird mit einer Bremsvorrichtung mit den Merkmalen des Patentanspruchs 1 gelöst. Die Aufgabe wird des Weiteren mit einem Verfahren zum Betreiben einer Bremsvorrichtung mit den Merkmalen des Patentanspruchs 10 gelöst.

Die Aufgabe wird überdies mit einer Spaltbandanlage zur Längsteilung eines aufzuwickelnden, längsförmigen Mediums mit den Merkmalen des Patentanspruchs 12 gelöst.

Die vorliegende Erfindung schafft eine Bremsvorrichtung zum Abbremsen eines aufzuwickelnden, längsförmigen Mediums, mit einer Halteeinrichtung, in welcher zumindest eine Bremsrolle und zumindest ein, zu der zumindest einen Bremsrolle benachbart angeordnetes Gegenstück angeordnet sind, wobei die zumindest eine Bremsrolle an axialen Endabschnitten in der Halteeinrichtung drehbar gelagert ist, wobei das aufzuwickelnde, längsförmige Medium zwischen der zumindest einen Bremsrolle und dem zumindest einen Gegenstück durchführbar ist und mit der zumindest einen Bremsrolle und dem zumindest einen Gegenstück Reibkontakt bildet, und mit einer mit der zumindest einen Bremsrolle gekoppelten Energierückgewinnungseinrichtung, welche dazu ausgebildet ist, die zumindest eine Bremsrolle zum Abbremsen des aufzuwickelnden, längsförmigen Mediums mit einem vorgegebenen Bremsmoment zu beaufschlagen.

Erfindungsgemäß ist vorgesehen, dass das in der Halteeinrichtunq angeordnete zumindest eine Gegenstück durch zumindest eine weitere Bremsrolle ausgebildet ist, und wobei die zumindest eine Bremsrolle und die zumindest eine weitere Bremsrolle mit der Energierückgewinnungseinrichtung über ein Getriebe gekoppelt sind. Somit kann die Bremsvorrichtung in vorteilhafter Weise an jeweilige systemische und bauliche Anforderungen angepasst werden. Im Falle des Vorsehens einer Mehrzahl von Bremsrollen können diese beispielsweise an das Getriebe gekoppelt sein, das wiederum mit der Energierückgewinnungseinrichtung verbunden ist.

Erfindungsgemäß ist ferner vorgesehen, dass die Energierückgewinnungseinrichtung durch einen elektrischen Generator ausgebildet ist.

Außerdem ist erfindungsgemäß vorgesehen, dass das Getriebe durch ein Richtmaschinengetriebe ausgebildet ist, wobei das Getriebe durch einen Kettentrieb mit dem elektrischen Generator gekoppelt ist. Das Vorsehen eines Richtmaschinengetriebes ermöglicht eine effektive Drehmomentübertragung der Mehrzahl von Eingangswellen auf eine gemeinsame Ausgangswelle des Getriebes, wobei der Kettentrieb eine konstruktiv einfache und zuverlässige Kraftübertragung vom Getriebe an den elektrischen Generator ermöglicht.

Die vorliegende Erfindung schafft des Weiteren ein Verfahren zum Betreiben der erfindungsgemäßen Bremsvorrichtung zum Abbremsen eines aufzuwickelnden, längsförmigen Mediums. Das Verfahren umfasst ein Bereitstellen der Halteeinrichtung mit der zumindest einen Bremsrolle und dem zumindest einen Gegenstück

Das Verfahren umfasst des Weiteren ein Anordnen der zumindest einen Bremsrolle und des zumindest einen, Gegenstücks derart, dass das aufzuwickelnde, längsförmige Medium zwischen der zumindest einen Bremsrolle und dem zumindest einen Gegenstück durchgeführ ist und mit der zumindest einen Bremsrolle und dem zumindest einen Gegenstück Reibkontakt bildet.

Das Verfahren umfasst ferner ein Umwandeln einer Bewegungsenergie der zumindest einen Bremsrolle und der zumindest einen weiteren Bremsrolle mittels einer mit der zumindest einen Bremsrolle und der zumindest einen weiteren Bremsrolle gekoppelten Energierückgewinnungseinrichtung, welche die zumindest eine Bremsrolle zum Abbremsen des aufzuwickelnden, längsförmigen Mediums mit einem vorgegebenen Bremsmoment beaufschlagt.

Die vorliegende Erfindung schafft überdies eine Spaltbandanlage zur Längsteilung eines aufzuwickelnden, längsförmigen Mediums, vorzugsweise eines Stahlbands, mit einer Abwickelhaspel, einer Aufwickelhaspel und einer zwischen der Abwickelhaspel und der Aufwickelhaspel angeordneten erfindungsgemäßen Bremsvorrichtung.

Eine Idee der vorliegenden Erfindung ist es, durch Vorsehen der Energierückgewinnungseinrichtung, welche mit der zumindest einen Bremsrolle gekoppelt ist, eine Bremsleistung der zumindest einen Bremsrolle zum Abbremsen des bandförmigen Materials in vorteilhafter Weise zu rekuperieren und damit einem weiteren Verbraucher zur Verfügung zu stellen. Somit kann die Energie, welche beim Abbremsen des aufzuwickelnden, längsförmigen Mediums normalerweise verschwendet wird, wieder nutzbar gemacht werden.

Des Weiteren kann eine Oberfläche des aufzuwickelnden, längsförmigen Mediums durch Vorsehen der zumindest einen Bremsrolle geschont werden, da im Gegensatz zu den Bremsbacken bei dem Abrollen der Bremsrolle auf dem längsförmigen Medium lediglich Punktkontakt gegenüber einem Linienkontakt im Rahmen der Backenbremse des Stands der Technik vorgesehen ist.

Vorteilhafte Ausführunasformen und Weiterbildungen ergeben sich aus den Unteransprüchen sowie aus der Beschreibung unter Bezugnahme auf die Figuren.

Gemäß einer weiteren bevorzugten Weiterbildung ist vorgesehen, dass die zumindest eine weitere Bremsrolle mit der Energierückgewinnungseinrichtung gekoppelt ist, wobei die Energierückgewinnungseinrichtung dazu ausgebildet ist, die weitere Bremsrolle zum Abbremsen des aufzuwickelnden, längsförmigen Mediums mit einem vorgegebenen Bremsmoment zu beaufschlagen.

Durch das Beaufschlagen des aufzuwickelnden, längsförmigen Mediums mit dem vorgegebenen Bremsmoment kann die Energierückgewinnungseinrichtung in vorteilhafter Weise die Bremsleistung rekuperieren und an einen anderen geeigneten Verbraucher zur Verfügung stellen.

Gemäß einer weiteren bevorzugten Weiterbildung ist vorgesehen, dass die zumindest eine Bremsrolle zur Umwandlung einer Bewegungsenergie in elektrische Energie mit dem elektrischen Generator gekoppelt ist, wobei die durch den elektrischen Generator erzeugte elektrische Energie an einen ersten Verbraucher, insbesondere einen elektrischen Verbraucher, bereitstellbar oder in das Netz einspeisbar ist.

Das Ausbilden der Energierückgewinnungseinrichtung in Form einer elektrischen Maschine, welche als Generator betrieben wird, bietet in vorteilhafter Weise die größtmögliche Flexibilität, da mit der erzeugten elektrischen Energie eine Vielzahl von Verbrauchern antreibbar bzw. die Energie in das Netz einspeisbar ist.

Gemäß einer weiteren bevorzugten Weiterbildung ist vorgesehen, dass ein durch die Energierückgewinnungseinrichtung erzeugtes Bremsmoment durch eine Regeleinrichtung variabel regelbar ist, wobei die Regeleinrichtung durch einen mechanischen Regler oder einen elektrischen Regler ausgebildet ist. Somit kann eine Bremsleistung der mit der Energierückgewinnungseinrichtung gekoppelten zumindest einen Bremsrolle individuell an eine Dicke des aufzuwickelnden, längsförmigen Mediums angepasst werden, sodass die Bremsleistung für eine zu verarbeitende Dicke des längsförmigen Mediums optimal einstellbar ist. Dadurch kann ein Versatz beim Wickeln in Axialrichtung des längsförmigen Mediums verhindert und zusätzlich eine Bewegungsenergie der zumindest einen Bremsrolle rekuperiert werden.

Gemäß einer weiteren bevorzugten Weiterbildung ist vorgesehen, dass in der Halteeinrichtung ein erstes Bremsrollenpaar, ein zweites Bremsrollenpaar und ein drittes Bremsrollenpaar in Längsrichtung der Halteeinrichtung zueinander versetzt und höhenverstellbar angeordnet sind, wobei das erste Bremsrollenpaar, das zweite Bremsrollenpaar und das dritte Bremsrollenpaar von einer Betriebsposition in eine Außerbetriebsposition höhenverstellbar sind.

Das Bereitstellen mehrerer Bremsrollenpaare weist den Vorteil auf, dass durch jedes der Bremsrollenpaare im Gegensatz zu einem Vorsehen lediglich eines Bremsrollenpaars weniger Drehmoment auf entsprechende das Bremsrollenpaar mit einem Getriebe verbindende Wellen übertragen wird. Des Weiteren wird durch das Vorsehen einer Mehrzahl von Bremsrollenpaaren eine Redundanz in der Bandbremsvorrichtung bereitgestellt, durch welche ein Ausfall eines der Bremsrollenpaare durch eines der weiteren Bremsrollenpaare kompensierbar ist.

Die Höhenverstellbarkeit der jeweiligen Bremsrollenpaare ermöglicht zudem, dass je nach individuellen Anforderungen an die Bremsleistung eine Anzahl verwendeter Bremsrollenpaare steuerbar ist, sodass in der vorliegenden Bandbremsvorrichtung beispielsweise ein Bremsrollenpaar, zwei Bremsrollenpaare oder drei Bremsrollenpaare einsetzbar sind.

Gemäß einer weiteren bevorzugten Weiterbildung ist vorgesehen, dass eine Höhenposition der Bremsrolle und/oder der weiteren Bremsrolle durch an jeweiligen axialen Endabschnitten der Bremsrolle und der weiteren Bremsrolle mit diesen verbundenen, an der Halteeinrichtung befestigten, Hydraulikzylindern verstellbar ist.

Somit kann die Bremsrolle und/oder die weitere Bremsrolle des jeweiligen Bremsrollenpaars durch die Hydraulikzylinder bei Bedarf von der Betriebsposition in die Außerbetriebsposition und umgekehrt verstellt werden.

Gemäß einer weiteren bevorzugten Weiterbildung ist vorgesehen, dass die Bremsrolle und die weitere Bremsrolle an den axialen Endabschnitten eine Keilwelle aufweisen, wobei die Keilwelle der Bremsrolle mit einer Keilnabe eines ersten Gelenkwellenflansches und die Keilwelle der weiteren Bremsrolle mit einer Keilnabe eines zweiten Gelenkwellenflansches formschlüssig verbunden sind.

Das Ausbilden der axialen Endabschnitte der Bremsrolle und der weiteren Bremsrolle in Form einer Keilnabe ermöglicht eine effiziente Drehmomentübertragung auf nachgelagerte Wellen, ohne dass es zu einem Durchrutschen kommt. Durch die formschlüssige Verbindung der Keilwelle der Bremsrolle mit der Keilnabe eines ersten Gelenkwellenflansches und der Keilwelle der weiteren Bremsrolle mit einer Keilnabe eines zweiten Gelenkwellenflansches kann eine effektive Kraftübertragung von der Keilwelle auf die Keilnabe des jeweiligen Gelenkwellenflansches ermöglicht werden.

Gemäß einer weiteren bevorzugten Weiterbildung ist vorgesehen, dass der erste Gelenkwellenflansch mit einer ersten Gelenkwelle und der zweite Gelenkwellenflansch mit einer zweiten Gelenkwelle verbunden sind, wobei die erste Gelenkwelle mit einer ersten Eingangswelle des Getriebes und die zweite Gelenkwelle mit einer zweiten Eingangswelle des Getriebes verbunden sind.

Somit kann eine Bewegungsenergie jeder einzelnen der Bremsrollen mittels einer Gelenkwelle direkt an das Getriebe übertragen werden.

Gemäß einer weiteren bevorzugten Weiterbildung ist vorgesehen, dass das Getriebe dazu ausgebildet ist, eine Drehzahl der ersten Bremsrolle und der zweiten Bremsrolle des zumindest einen Bremsrollenpaars zu synchronisieren und deren Drehmoment auf eine gemeinsame Ausgangswelle des Getriebes zusammenzufassen.

Das Vorsehen des Getriebes weist somit den Vorteil auf, dass eine Drehzahl der Bremsrolle und der weiteren Bremsrolle eines jeweiligen Bremsrollenpaars stets synchron gehalten werden kann, was zu einer gleichmäßigen Abbremsung des längsförmigen Mediums durch das jeweilige Bremsrollenpaar beiträgt.

Gemäß einer weiteren bevorzugten Weiterbildung ist vorgesehen, dass die erste Gelenkwelle dazu ausgebildet ist, einen Höhenversatz der Bremsrolle zu der ersten Eingangswelle des Getriebes auszugleichen, und wobei die zweite Gelenkwelle dazu ausgebildet ist, einen Höhenversatz der weiteren Bremsrolle zu der zweiten Eingangswelle des Getriebes auszugleichen.

Das Vorsehen der Gelenkwellen weist somit den Vorteil auf, dass die jeweiligen Bremsrollen stets mit der zugeordneten Eingangswelle des Getriebes verbunden sind, egal ob die jeweiligen Bremsrollen in einer Betriebsposition oder in einer Außerbetriebsposition angeordnet sind.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Bremsvorrichtung zum Abbremsen eines aufzuwickelnden, längsförmigen Mediums gemäß einem Ausführunqsbeispiel der Erfindung;
- Fig. 2: eine schematische Darstellung der Bremsvorrichtung zum Abbremsen des aufzuwickelnden, längsförmigen Mediums, welche nicht von der Erfindung umfasst ist;
- Fig. 3: eine schematische Darstellung der Bremsvorrichtung zum Abbremsen des aufzuwickelnden, längsförmigen Mediums welche nicht von der Erfindung umfasst ist
- Fig. 4: eine schematische Darstellung der Bremsvorrichtung zum Abbremsen des aufzuwickelnden, längsförmigen Mediums, welche nicht von der Erfindung umfasst ist
- Fig. 5: eine schematische Darstellung der Bremsvorrichtung zum Abbremsen des aufzuwickelnden, längsförmigen Mediums, welche nicht von der Erfindung umfasst ist
- Fig. 6: eine schematische Darstellung der Bremsvorrichtung zum Abbremsen des aufzuwickelnden, längsförmigen Mediums gemäß einem weiteren Ausführungsbeispiel der Erfindung;
- Fig. 7: eine Seitenansicht der Bremsvorrichtung zum Abbremsen des aufzuwickelnden, längsförmigen Mediums gemäß dem in Fig. 6 gezeigten weiteren Ausführungsbeispiel der Erfindung;
- Fig. 8: eine weitere Seitenansicht der Bremsvorrichtung zum Abbremsen des aufzuwickelnden, längsförmigen Mediums gemäß dem in Fig. 6 gezeigten weiteren Ausführungsbeispiel der Erfindung;
- Fig. 9: eine Draufsicht der Bremsvorrichtung zum Abbremsen des aufzuwickelnden, längsförmigen Mediums gemäß der in Fig. 6 gezeigten weiteren Ausführungsbeispiels der Erfindung;
- Fig. 10: ein Ablaufdiagramm eines Verfahrens zum Betreiben einer Bremsvorrichtung zum Abbremsen des aufzuwickelnden, längsförmigen Mediums gemäß einem Ausführungsbeispiel der Erfindung; und
- Fig. 11: eine schematische Darstellung einer Spaltbandanlage zur Längsteilung des aufzuwickelnden, längsförmigen Mediums gemäß einem Ausführungsbeispiel der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

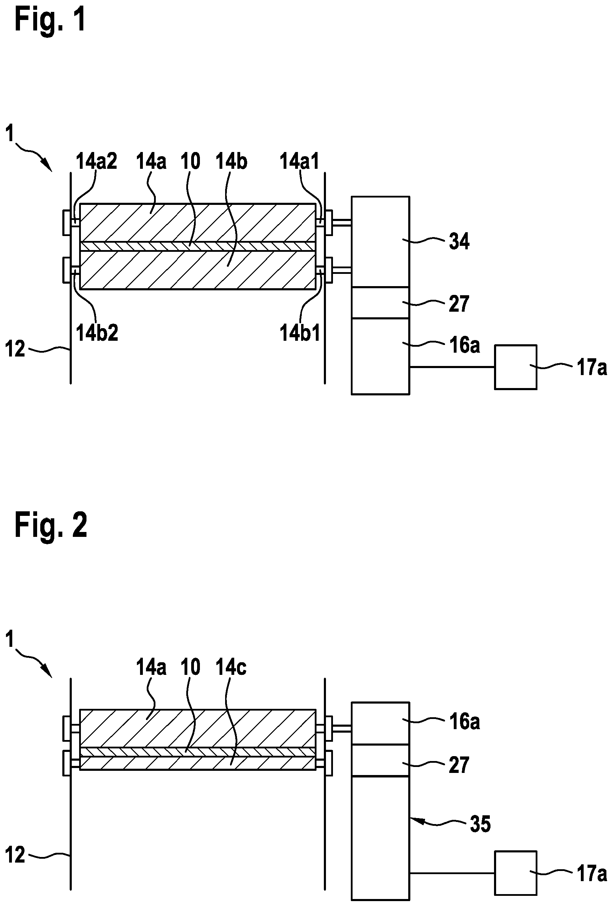

Fig. 1 zeigt eine schematische Darstellung einer Bremsvorrichtung zum Abbremsen eines aufzuwickelnden, längsförmigen Mediums gemäß einer bevorzugten Ausführungsform der Erfindung.

Die Bremsvorrichtung 1 zum Abbremsen des aufzuwickelnden, längsförmigen Mediums 10 weist eine Haltevorrichtung 12 auf.

In der Halteeinrichtung 12 sind eine Bremsrolle 14a und eine weitere Bremsrolle 14b angeordnet. Die Bremsrolle 14a ist an axialen Endabschnitten 14a1, 14a2 in der Halteeinrichtung 12 drehbar gelagert. Ferner ist die weitere Bremsrolle 14b ebenfalls an axialen Endabschnitten 14b1, 14b2 in der Halteeinrichtung 12 drehbar gelagert.

Das aufzuwickelnde, längsförmige Medium 10 ist zwischen der Bremsrolle 14a und der weiteren Bremsrolle 14b durchführbar und bildet mit der Bremsrolle 14a und der weiteren Bremsrolle 14b Reibkontakt.

Die Bremsvorrichtung 1 weist ferner eine mit der Bremsrolle 14a und der weiteren Bremsrolle 14b über ein Getriebe 34 gekoppelte Energierückgewinnungseinrichtung 16a auf, welche dazu ausgebildet ist, die Bremsrolle 14a und die weitere Bremsrolle 14b zum Abbremsen des aufzuwickelnden, längsförmigen Mediums 10 mit einem vorgegebenen Bremsmoment zu beaufschlagen.

Das aufzuwickelnde, längsförmige Medium 10 ist vorzugsweise durch eine Blechrolle, beispielsweise eine Stahlblechrolle, insbesondere vorzugsweise eine Edelstahlblechrolle, ausgebildet. Alternativ kann das aufzuwickelnde, längsförmige Medium beispielsweise durch einen Draht, eine Papierbahn oder ein sonstiges bahnförmiges Material ausgebildet sein.

Die Energierückgewinnungseinrichtung 16a ist erfindungsgemäß durch einen elektrischen Generator 16a ausgebildet. Die Bremsrolle 14a und die weitere Bremsrolle 14b sind zur Umwandlung einer Bewegungsenergie in elektrische Energie mit dem elektrischen Generator 16a gekoppelt.

Die durch den elektrischen Generator erzeugte Energie ist an einen ersten Verbraucher 17a, insbesondere einen elektrischen Verbraucher, bereitstellbar oder in das Netz einspeisbar. Des Weiteren ist eine Regeleinrichtung 27 vorgesehen, welche eine variable Regelung des durch den elektrischen Generator 16a erzeugten Bremsmoments ermöglicht.

Die Regeleinrichtung 27 ist vorzugsweise durch einen mechanischen Regler ausgebildet. Alternativ kann die Regeleinrichtung 27 beispielsweise durch einen elektrischen Regler ausgebildet sein.

Fig. 2 zeigt eine schematische Darstellung der Bremsvorrichtung zum Abbremsen des aufzuwickelnden, längsförmigen Mediums

In der vorliegenden Ausführungsform ist das in der Halteeinrichtung 12 angeordnete Gegenstück 14c durch eine Gleitunterlage 14c ausgebildet. Somit ist lediglich die Bremsrolle 14a mit der als elektrischer Generator ausgebildeten Energierückgewinnungseinrichtung 16a gekoppelt. Da indem vorliegenden Beispiel lediglich eine Bremsrolle 14a vorgesehen ist, kann der elektrische Generator 16a mit der Bremsrolle 14a direkt gekoppelt werden, ohne ein Getriebe vorzusehen. Der elektrische Generator 16a und die Regeleinrichtung 27 sind in der vorliegenden Ausführungsform in einem gemeinsamen Gehäuse 35 angeordnet.

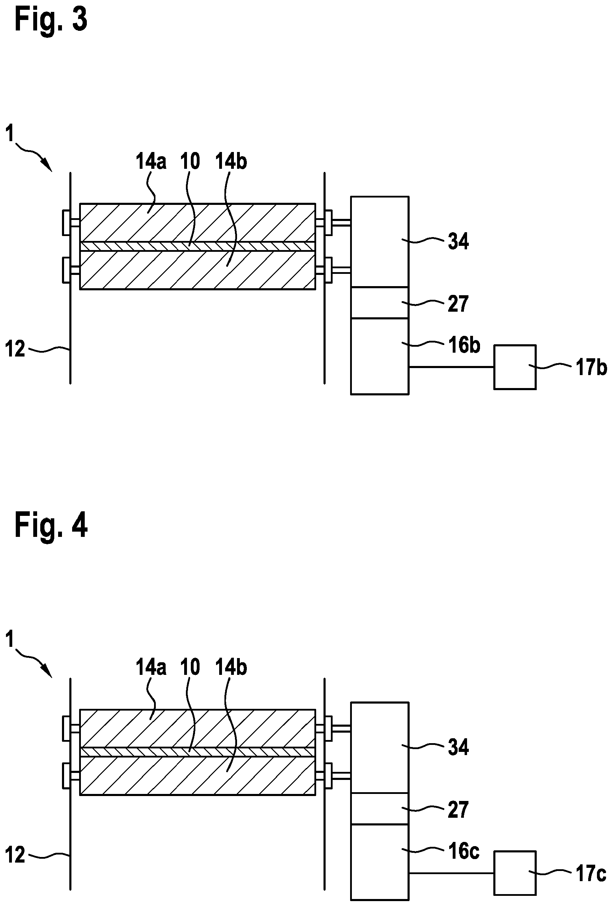

Fig. 3 zeigt eine schematische Darstellung der Bremsvorrichtung zum Abbremsen des aufzuwickelnden, längsförmigen Mediums gemäß einem weiteren Beispiel.

Gemäß dem vorliegenden Beispiel sind in der Halteeinrichtung 12 die Bremsrolle 14a und die weitere Bremsrolle 14b angeordnet, zwischen welchen das aufzuwickelnde, längsförmige Medium 10 durchführbar ist. Die Energierückgewinnungseinrichtung 16b ist durch eine Hydraulikpumpe 16b ausgebildet.

Ein durch die Hydraulikpumpe 16b erzeugter Hydraulikdruck ist an einen zweiten Verbraucher 17b bereitstellbar. Eine Bewegungsenergie der Bremsrolle 14a und der weiteren Bremsrolle 14b kann somit durch die Hydraulikpumpe 16b in einen Hydraulikdruck eines Fluids umgewandelt werden.

Fig. 4 zeigt eine schematische Darstellung der Bremsvorrichtung zum Abbremsen des aufzuwickelnden, längsförmigen Mediums gemäß einem weiteren Beispiel .

Gemäß dem vorliegenden Beispiel sind in der Halteeinrichtung 12 die Bremsrolle 14a und die weitere Bremsrolle 14b angeordnet, zwischen welchen das aufzuwickelnde, längsförmige Medium 10 durchführbar ist. Die Energierückgewinnungseinrichtung 16b ist durch eine Pneumatikpumpe 16c ausgebildet.

Ein durch die Pneumatikpumpe 16c erzeugter Pneumatikdruck ist an einen zweiten Verbraucher 17c bereitstellbar. Eine Bewegungsenergie der Bremsrolle 14a und der weiteren Bremsrolle 14b kann somit durch die Pneumatikpumpe 16c in einen Pneumatikdruck eines Fluids umgewandelt werden.

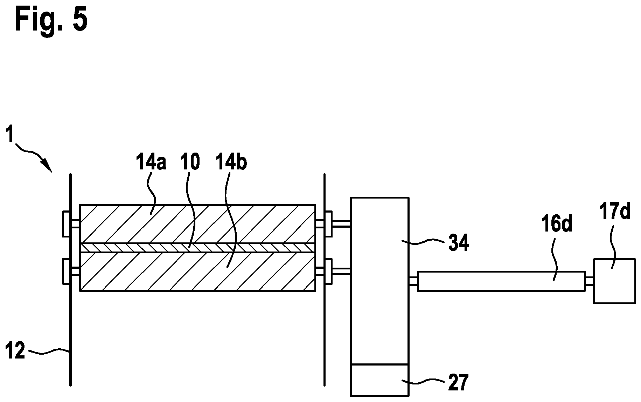

Fig. 5 zeigt eine schematische Darstellung der Bremsvorrichtung zum Abbremsen des aufzuwickelnden, längsförmigen Mediums gemäß einem weiteren Beispiel.

Gemäß dem vorliegenden Beispiel sind in der Halteeinrichtung 12 die Bremsrolle 14a und die weitere Bremsrolle 14b angeordnet, zwischen welchen das aufzuwickelnde, längsförmige Medium 10 durchführbar ist, wobei die Bremsrolle 14a und die weitere Bremsrolle 14b über ein Getriebe 34 mit einer Welle 16d zum Antrieb eines vierten Verbrauchers 17d gekoppelt sind.

Die Energierückgewinnungseinrichtung 16d ist somit durch die Welle 16d zum Antrieb des vierten Verbrauchers 17d ausgebildet.

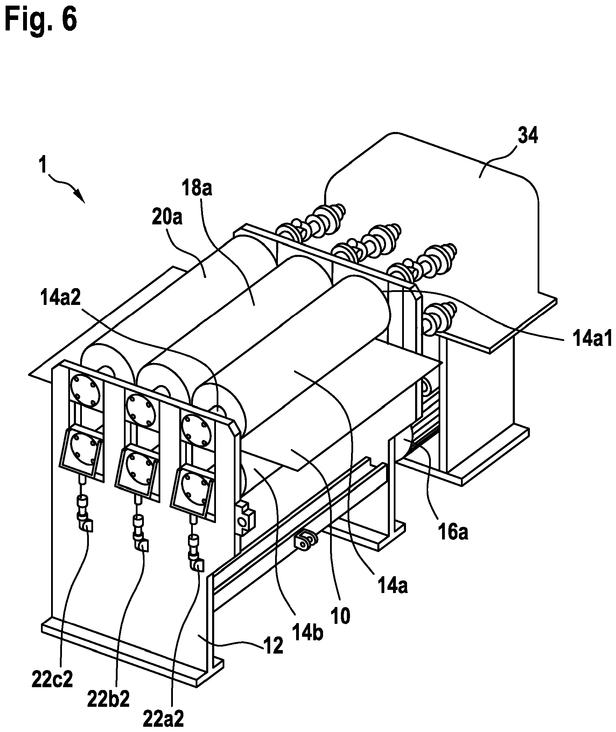

Fig. 6 zeigt eine schematische Darstellung der Bremsvorrichtung zum Abbremsen des aufzuwickelnden, längsförmigen Mediums gemäß einem weiteren Beispiel .

Das längsförmige Medium 10 ist vorzugsweise durch eine Stahlblechrolle ausgebildet. Alternativ kann das längsförmige Medium 10 beispielsweise durch eine Papier- oder Kunststoffrolle oder eine Drahtrolle ausgebildet sein. Die Bremsvorrichtung 1 zum Abbremsen des aufzuwickelnden, längsförmigen Mediums 10 weist ferner die Halteeinrichtung 12 auf.

In der Halteeinrichtung 12 sind gemäß dem vorliegenden Beispiel drei Bremsrollenpaare angeordnet, wobei in der vorliegenden Ansicht ein erstes Bremsrollenpaar 14a, 14b sowie jeweils eine obere Bremsrolle 18a, 20a eines zweiten Bremsrollenpaars und eines dritten Bremsrollenpaars sichtbar ist.

Die jeweiligen Bremsrollenpaare, beispielhaft erläutert anhand des ersten Bremsrollenpaars 14a, 14b, sind an jeweiligen axialen Endabschnitten in der Halteeinrichtung 12 drehbar gelagert.

So ist das erste Bremsrollenpaar 14a, 14b an entsprechenden axialen Abschnitten 14a1, 14b1 in der Halteeinrichtung 12 drehbar gelagert. Das erste Bremsrollenpaar weist die Bremsrolle 14a und die weitere Bremsrolle 14b auf, welche in der Halteeinrichtung 12 derart zueinander angeordnet sind, dass das längsförmige Medium 10 zwischen der Bremsrolle 14a und der weiteren Bremsrolle 14b durchführbar ist.

Die Bremsvorrichtung 1 ist durch in den nachfolgenden Figuren beschriebene Verbindungsmittel mit dem Getriebe 34 gekoppelt, welches wiederum mit einem elektrischen Generator 16a verbunden ist. Eine Bewegungsenergie der jeweiligen verwendeten Bremsrollenpaare wird somit an den elektrischen Generator 16a zur Umwandlung der Bewegungsenergie in elektrische Energie übertragen.

Das Getriebe 34 ist ferner dazu ausgebildet, eine Drehzahl der Bremsrolle 14a und der weiteren Bremsrolle 14b des ersten Bremsrollenpaars 14a, 14b zu synchronisieren und deren Drehmoment auf eine (in Fig. 1 nicht gezeigte) gemeinsame Ausgangswelle des Getriebes 34 zusammenzufassen. Gleiches gilt für die jeweiligen Bremsrollen des zweiten Bremsrollenpaars und des dritten Bremsrollenpaars.

Das in Fig. 6 - 9 gezeigte Getriebe sowie die Verbindungsmittel zum Verbinden der jeweiligen Bremsrollen mit dem Getriebe sind ebenfalls auf die in Fig. 1, 3, 4 und 5 gezeigten Beispielen anwendbar.

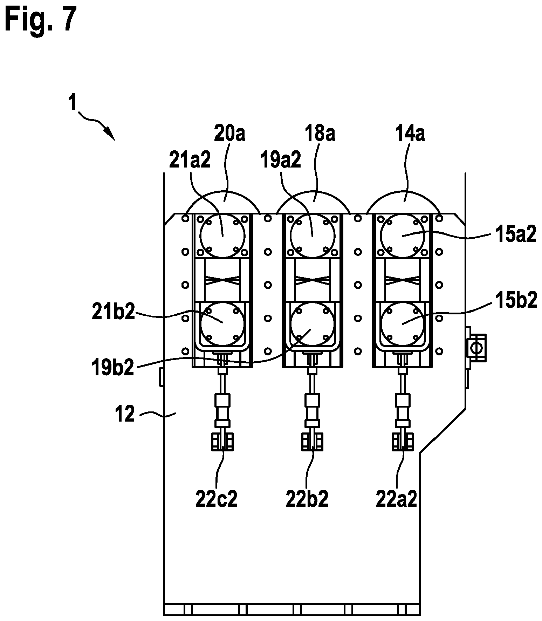

Fig. 7 zeigt eine Seitenansicht der Bremsvorrichtung zum Abbremsen des aufzuwickelnden, längsförmigen Mediums gemäß dem in Fig. 6 gezeigten Beispiel .

Eine Höhenposition der Bremsrolle 14a und der weiteren Bremsrolle 14b des ersten Bremsrollenpaars, des zweiten Bremsrollenpaars und des dritten Bremsrollenpaars ist durch an jeweiligen axialen Endabschnitten der Bremsrolle und der weiteren Bremsrolle des jeweiligen Bremsrollenpaars mit diesen verbundenen, an der Halteeinrichtung 12 befestigten Hydraulikzylindern 22a1, 22b2, 22c2 verstellbar.

In der vorliegenden Seitenansicht ist eine der beiden Seiten der Halteeinrichtung dargestellt. Die Bremsrolle und die weitere Bremsrolle des jeweiligen Bremsrollenpaars sind hierbei in einem im Wesentlichen vertikal angeordneten Schlitz verfahrbar angeordnet.

Eine Verbindung des jeweiligen Hydraulikzylinders mit der jeweiligen oberen Bremsrolle ist in der vorliegenden Darstellung nicht gezeigt, wobei dem Fachmann ersichtlich ist, dass die obere Bremsrolle und die untere Bremsrolle durch einen jeweiligen, dafür geeigneten Mechanismus derart verbunden sein können, dass bei Betätigung des Hydraulikzylinders diese beispielsweise synchron aufeinander zu bzw. voneinander weg bewegbar sein können.

Alternativ kann der jeweilige Hydraulikzylinder beispielsweise lediglich mit einer der unteren Bremsrollen des jeweiligen Bremsrollenpaars verbunden sein und die jeweilige obere Bremsrolle des entsprechenden Bremsrollenpaars in der Halteeinrichtung fixiert sein, sodass bei einem Bewegen eines jeweiligen Bremsrollenpaars in eine Außereingriffsposition bzw. Außerbetriebsposition lediglich eine der beiden Bremsrollen des jeweiligen Bremsrollenpaars bewegt wird.

Die Bremsrolle 14a des ersten Bremsrollenpaars ist an einem ihrer axialen Endabschnitte mittels eines Lagers 15a2 in der Halteeinrichtung 12 drehbar gelagert. Die weitere Bremsrolle 14b ist mittels eines Lagers 15b2 in der Halteeinrichtung 12 drehbar gelagert.

Gleichermaßen ist eine Bremsrolle 18a des zweiten Bremsrollenpaars durch ein Lager 19a2 und die (in Fig. 7 nicht gezeigte) weitere Bremsrolle des zweiten Bremsrollenpaars durch ein Lager 19b2 in der Halteeinrichtung 12 drehbar gelagert.

Darüber hinaus ist die Bremsrolle 20a1 des dritten Bremsrollenpaars durch ein Lager 21a2 und die (in Fig. 7 nicht gezeigte) weitere Bremsrolle des dritten Bremsrollenpaars durch ein Lager 21b2 in der Halteeinrichtung 12 drehbar gelagert.

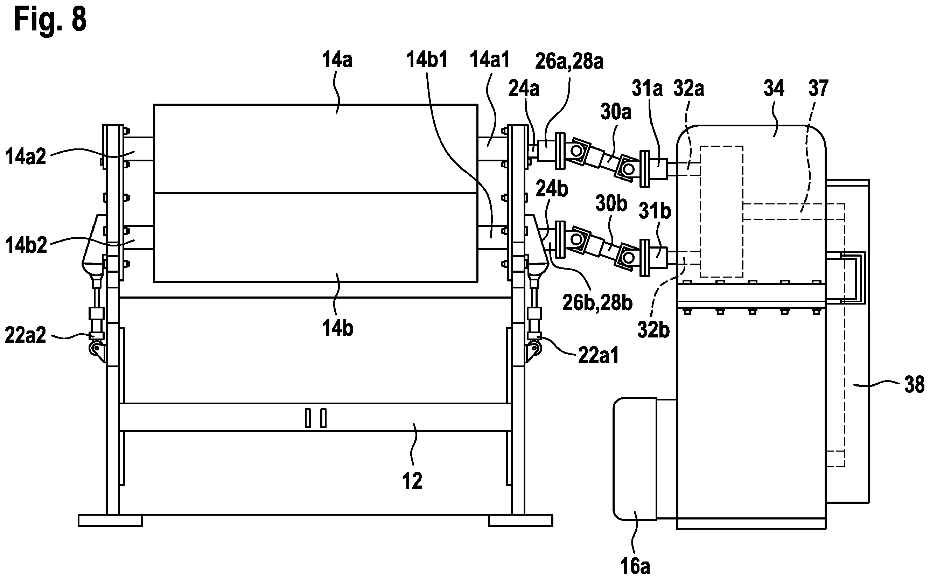

Fig. 8 zeigt eine weitere Seitenansicht der Bremsvorrichtung zum Abbremsen des aufzuwickelnden, längsförmigen Mediums gemäß dem in Fig. 6 gezeigten Beispiel.

Die Bremsrolle 14a und die weitere Bremsrolle 14b des ersten Bremsrollenpaars weisen an axialen Endabschnitten 14a1, 14b2 eine Keilwelle 24a, 24b auf. Die axialen Endabschnitte 14a1, 14b2 sind hierbei auf einer dem Getriebe 34 gegenüberliegenden Seite der Halteeinrichtung 12 angeordnet.

Die Keilwelle 24a der Bremsrolle 14a ist mit einer Keilnabe 26a eines ersten Keilwellenflansches 28a formschlüssig verbunden. Ferner ist die Keilwelle 24b der weiteren Bremsrolle 14b mit einer Keilnabe 26b eines zweiten Gelenkwellenflansches 28b formschlüssig verbunden.

Der erste Gelenkwellenflansch 28a ist mit einer ersten Gelenkwelle 30a verbunden. Ferner ist der zweite Gelenkwellenflansch 28b mit einer zweiten Gelenkwelle 30b verbunden.

Die erste Gelenkwelle 30a ist mit einer ersten Eingangswelle 32a des Getriebes 34 verbunden. Ferner ist die zweite Gelenkwelle 30b mit einer zweiten Eingangswelle 32b des Getriebes 34 verbunden. Die erste Eingangswelle 32a und die zweite Eingangswelle 32b des Getriebes 34 werden in dem Getriebe 34 auf die gemeinsame Ausgangswelle 37 zusammengefasst, die durch einen Kettentrieb 38 mit dem darunter angeordneten elektrischen Generator 16a gekoppelt ist. Das Getriebe 34 ist erfindungsgemäß durch ein Richtmaschinengetriebe ausgebildet.

Des Weiteren ist die erste Gelenkwelle 30a dazu ausgebildet, einen Höhenversatz der Bremsrolle 14a zu der ersten Eingangswelle 32a des Getriebes 34 auszugleichen. Ferner ist die zweite Gelenkwelle 30b dazu ausgebildet, einen Höhenversatz der weiteren Bremsrolle 14b zu der zweiten Eingangswelle 32b des Getriebes 34 auszugleichen.

Die erste Eingangswelle 30a und die zweite Eingangswelle 30b sind jeweils dazu ausgebildet, ein Drehmoment von bis zu 3000 Nm an das Getriebe zu übertragen. Die Bremsrolle 14a und die weitere Bremsrolle 14b des ersten Bremsrollenpaars 14a, 14b sowie des (in Fig. 8 nicht dargestellten) zweiten und dritten Bremsrollenpaars weisen jeweils ein Durchmesser-/Längeverhältnis von 0,1 bis 0,5, vorzugsweise von 0,2 bis 0,4, insbesondere vorzugsweise von 0,2 bis 0,3, auf.

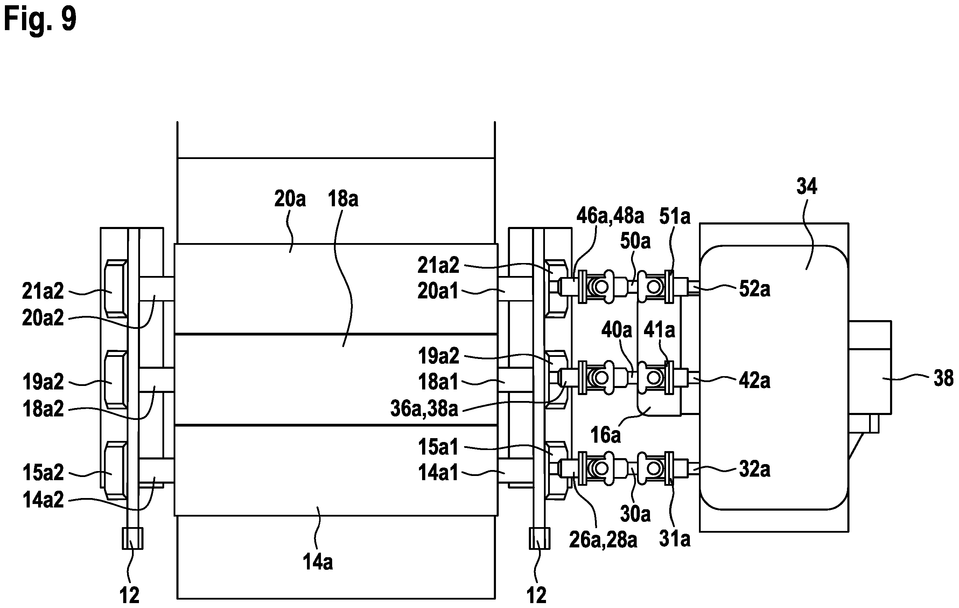

Fig. 9 zeigt eine Draufsicht der Bremsvorrichtung zum Abbremsen des aufzuwickelnden, längsförmigen Mediums gemäß dem in Fig. 6 gezeigten Beispiel .

In der Halteeinrichtung 12 sind in Förderrichtung des aufzuwickelnden, längsförmigen Mediums 10 sequenziell das erste Bremsrollenpaar 14a, 14b, das zweite Bremsrollenpaar 18a, 18b und das dritte Bremsrollenpaar 20a, 20b angeordnet, wobei in der vorliegenden Darstellung jeweils nur die jeweilige obere Bremsrolle des betreffenden Bremsrollenpaars gezeigt ist.

Das Getriebe 34 übersetzt die Drehzahl der Bremsrolle 14a, 18a, 20a und der weiteren Bremsrolle 14b, 18b, 20b der jeweiligen Bremsrollenpaare in eine höhere Drehzahl mit einem Verhältnis von 1:15 bis 1:25, vorzugsweise von 1:19.

Wie bereits in Fig. 8 mit Bezug auf die Bremsrolle 14a und die weitere Bremsrolle 14b des ersten Bremsrollenpaars beschrieben, sind ebenfalls die Bremsrolle und die weitere Bremsrolle des zweiten Bremsrollenpaars und dritten Bremsrollenpaars über entsprechende Verbindungsmittel mit dem Getriebe 34 verbunden.

So ist wie in Fig. 9 dargestellt die Bremsrolle 18a des zweiten Bremsrollenpaars in der Halteeinrichtung 12 an einem axialen Endabschnitt drehbar gelagert und weist an dem jeweiligen axialen Endabschnitt eine Keilwelle auf, die mit einer Keilnabe 36a eines ersten Gelenkwellenflansches 38a formschlüssig verbunden ist.

Der erste Gelenkwellenflansch 38a ist mit einer ersten Gelenkwelle 40a verbunden, wobei die erste Gelenkwelle 40a an ihrem entgegengesetzten axialen Endabschnitt mit einem weiteren Gelenkwellenflansch 41a verbunden ist, der wiederum mit einer ersten Eingangswelle 42a des Getriebes 34 gekoppelt ist.

Ferner ist wie in Fig. 9 dargestellt die Bremsrolle 18a des dritten Bremsrollenpaars in der Halteeinrichtung 12 an einem axialen Endabschnitt drehbar gelagert und weist an dem jeweiligen axialen Endabschnitt eine Keilwelle auf, die mit einer Keilnabe 46a eines ersten Gelenkwellenflansches 48a formschlüssig verbunden ist.

Der erste Gelenkwellenflansch 48a ist mit einer ersten Gelenkwelle 50a verbunden, wobei die erste Gelenkwelle 50a an ihrem entgegengesetzten axialen Endabschnitt mit einem weiteren Gelenkwellenflansch 51a verbunden ist, der wiederum mit einer ersten Eingangswelle 52a des Getriebes 34 gekoppelt ist.

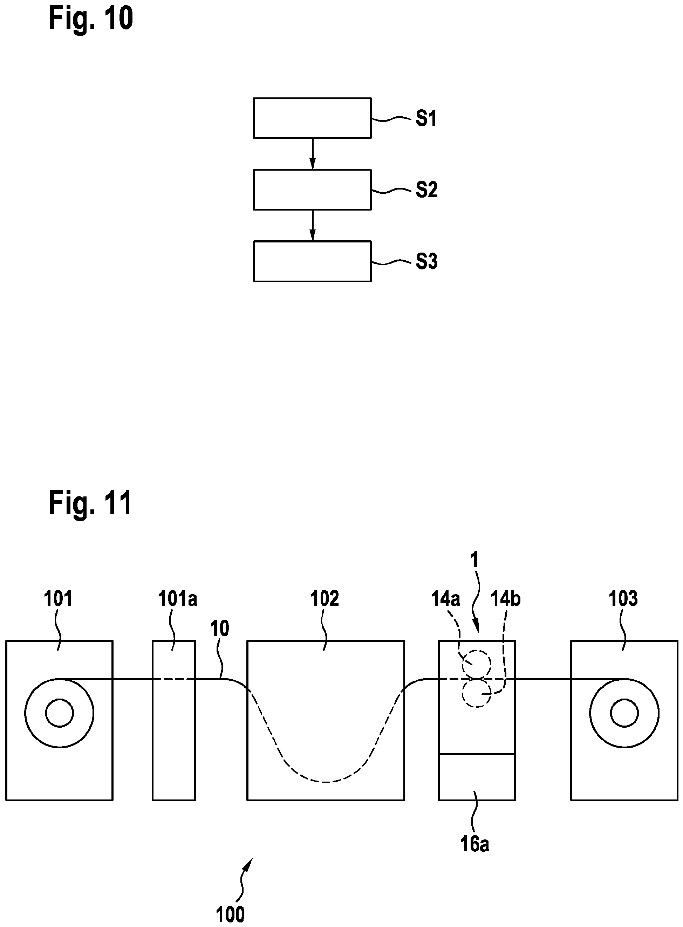

Fig. 10 zeigt ein Ablaufdiagramm eines Verfahrens zum Betreiben einer Bremsvorrichtung zum Abbremsen des aufzuwickelnden, längsförmigen Mediums

Das Verfahren umfasst ein Bereitstellen S1 einer Halteeinrichtung 12, in welcher zumindest eine Bremsrolle 14a und zumindest ein, zu der zumindest einen Bremsrolle 14a benachbart angeordnetes Gegenstück 14b; 14c angeordnet sind, wobei die zumindest eine Bremsrolle 14a an axialen Endabschnitten 14a1, 14a2 in der Halteeinrichtung 12 drehbar gelagert ist.

Das Verfahren umfasst des Weiteren ein Anordnen S2 der zumindest einen Bremsrolle 14a und des zumindest einen, zu der zumindest einen Bremsrolle 14a benachbart angeordneten Gegenstücks 14b; 14c derart, dass das aufzuwickelnde, längsförmige Medium 10 zwischen der zumindest einen Bremsrolle 14a und dem zumindest einen Gegenstück 14b; 14c durchführbar ist und mit der zumindest einen Bremsrolle 14a und dem zumindest einen Gegenstück 14b; 14c Reibkontakt bildet.

Das Verfahren umfasst ferner ein Umwandeln S3 einer Bewegungsenergie der zumindest einen Bremsrolle 14a mittels einer mit der zumindest einen Bremsrolle 14a gekoppelten Energierückgewinnungseinrichtung 16a; 16b; 16c; 16d, welche die zumindest eine Bremsrolle 14a zum Abbremsen des aufzuwickelnden, längsförmigen Mediums 10 mit einem vorgegebenen Bremsmoment beaufschlagt.

Fig. 11 zeigt eine schematische Darstellung einer Spaltbandanlage zur Längsteilung des aufzuwickelnden, längsförmigen Mediums.

Die Spaltbandanlage 100 weist eine Abwickelhaspel 101 auf, in welcher eine Rolle des längsförmigen Mediums eingelegt bzw. montiert ist. Ferner weist die Spaltbandanlage 100 eine Spalteinrichtung 101a zum Spalten des längsförmigen Mediums 10 auf.

Im Anschluss daran weist die Spaltbandanlage 100 eine Grube 102 auf, an welche sich die Bremsvorrichtung 1 gemäß der vorliegenden Erfindung anschließt. Im Anschluss an die Bremsvorrichtung 1 ist eine Aufwickelhaspel 103 angeordnet, in welcher das gespaltete, längsförmige Medium 10 erneut aufgerollt wird.

## Patentansprüche

1. Bremsvorrichtung (1) zum Abbremsen eines aufzuwickelnden, längsförmigen Mediums (10), mit:
einer Halteeinrichtung (12), in welcher zumindest eine Bremsrolle (14a) und
zumindest ein, zu der zumindest einen Bremsrolle (14a) benachbart angeordnetes Gegenstück (14b) angeordnet sind, wobei das in der Halteeinrichtung (12) angeordnete zumindest eine Gegenstück (14b) durch zumindest eine weitere Bremsrolle (14b) ausgebildet ist, und wobei die zumindest eine Bremsrolle (14a) und die zumindest eine weitere Bremsrolle (14b) an axialen Endabschnitten (14a1, 14a2, 14b1, 14b2)
in der Halteeinrichtung (12) drehbar gelagert
sind, wobei das aufzuwickelnde, längsförmige Medium (10) zwischen der zumindest einen Bremsrolle (14a) und dem zumindest einen Gegenstück (14b)
durchführbar ist und mit der zumindest einen Bremsrolle (14a) und dem zumindest einen Gegenstück (14b) Reibkontakt bildet; und
einer mit der zumindest einen Bremsrolle (14a) und der zumindest einen weiteren Bremsrolle (14b) gekoppelten Energierückgewinnungseinrichtung (16a) in Form eines elektrischen Generators (16a), welcher dazu ausgebildet ist, die zumindest eine Bremsrolle (14a) und die zumindest eine weitere Bremsrolle (14b) zum Abbremsen des aufzuwickelnden, längsförmigen Mediums (10) mit einem vorgegebenen Bremsmoment zu beaufschlagen, wobei die zumindest eine Bremsrolle (14a) und die zumindest eine weitere Bremsrolle (14b) mit der Energierückgewinnungseinrichtung (16a) über ein Getriebe (34) gekoppelt sind,
**dadurch gekennzeichnet, dass**
das Getriebe (34) durch ein Richtmaschinengetriebe ausgebildet ist und das Getriebe (34) durch einen Kettentrieb (38) mit dem elektrischen Generator (16) gekoppelt ist.

2. Bremsvorrichtung nach Anspruch 1, **dadurch gekennzeichnet, dass** die zumindest eine Bremsrolle (14a) zur Umwandlung einer Bewegungsenergie in elektrische Energie mit dem elektrischen Generator (16a) gekoppelt ist, wobei die durch den elektrischen Generator erzeugte elektrische Energie an einen ersten Verbraucher (17a), insbesondere einen elektrischen Verbraucher, bereitstellbar oder in das Netz einspeisbar ist.

3. Bremsvorrichtung nach einem der vorhergehenden Ansprüche, **dadurch gekennzeichnet, dass** ein durch die Energierückgewinnungseinrichtung (16a) erzeugtes Bremsmoment durch eine Regeleinrichtung (27) variabel regelbar ist, wobei die Regeleinrichtung (27) durch einen mechanischen Regler oder einen elektrischen Regler ausgebildet ist.

4. Bremsvorrichtung nach einem der vorhergehenden Ansprüche, **dadurch gekennzeichnet, dass** in der Halteeinrichtung (12) ein erstes Bremsrollenpaar (14a, 14b), ein zweites Bremsrollenpaar (18a, 18b) und ein drittes Bremsrollenpaar (20a, 20b) in Längsrichtung der Halteeinrichtung (12) zueinander versetzt und höhenverstellbar angeordnet sind, wobei das erste Bremsrollenpaar (14a, 14b), das zweite Bremsrollenpaar (18a, 18b) und das dritte Bremsrollenpaar (20a, 20b) von einer Betriebsposition in eine Außerbetriebsposition höhenverstellbar sind.

5. Bremsvorrichtung nach einem der vorhergehenden Ansprüche, **dadurch gekennzeichnet, dass** eine Höhenposition der Bremsrolle (14a) und/oder der weiteren Bremsrolle (14b) durch an jeweiligen axialen Endabschnitten (14a1, 14a2, 14b1, 14b2) der Bremsrolle (14a) und der weiteren Bremsrolle (14b) mit diesen verbundenen, an der Halteeinrichtung (12) befestigten, Hydraulikzylindern (22a1, 22a2, 22b1, 22b2, 22c1, 22c2) verstellbar ist.

6. Bremsvorrichtung nach einem der vorhergehenden Ansprüche, **dadurch gekennzeichnet, dass** die Bremsrolle (14a) und die weitere Bremsrolle (14b) an den axialen Endabschnitten (14a1, 14b1) eine Keilwelle (24a, 24b) aufweisen, wobei die Keilwelle (24a) der Bremsrolle (14a) mit einer Keilnabe (26a) eines ersten Gelenkwellenflansches (28a) und die Keilwelle (24b) der weiteren Bremsrolle (14b) mit einer Keilnabe (26b) eines zweiten Gelenkwellenflansches (28b) formschlüssig verbunden sind.

7. Bremsvorrichtung nach Anspruch 6, **dadurch gekennzeichnet, dass** der erste Gelenkwellenflansch (28a) mit einer ersten Gelenkwelle (30a) und der zweite Gelenkwellenflansch (28b) mit einer zweiten Gelenkwelle (30b) verbunden sind, wobei die erste Gelenkwelle (30a) mit einer ersten Eingangswelle (32a) des Getriebes (34) und die zweite Gelenkwelle (30b) mit einer zweiten Eingangswelle (32b) des Getriebes (34) verbunden sind.

8. Bremsvorrichtung nach Anspruch 7, **dadurch gekennzeichnet, dass** das Getriebe (34) dazu ausgebildet ist, eine Drehzahl der ersten Bremsrolle (14a) und der zweiten Bremsrolle (14b) des zumindest einen Bremsrollenpaars (14a, 14b) zu synchronisieren und deren Drehmoment auf eine gemeinsame Ausgangswelle (37) des Getriebes (34) zusammenzufassen.

9. Bremsvorrichtung nach Anspruch 7 oder 8, **dadurch gekennzeichnet, dass** die erste Gelenkwelle (30a) dazu ausgebildet ist, einen Höhenversatz der Bremsrolle (14a) zu der ersten Eingangswelle (32a) des Getriebes (34) auszugleichen, und wobei die zweite Gelenkwelle (30b) dazu ausgebildet ist, einen Höhenversatz der weiteren Bremsrolle (14b) zu der zweiten Eingangswelle (32b) des Getriebes (34) auszugleichen.

10. Verfahren zum Betreiben einer Bremsvorrichtung (1) zum Abbremsen eines aufzuwickelnden, längsförmigen Mediums (10) nach einem der voranstehenden Ansprüche, mit den Schritten:
Bereitstellen (S1) der Halteeinrichtung (12) mit der zumindest einen Bremsrolle (14a) und dem zumindest einen Gegenstück (14b) in Form der zumindest einen weiteren Bremsrolle (14b);
Anordnen (S2) der zumindest einen Bremsrolle (14a) und des zumindest einen Gegenstücks (14b; 14c) derart, dass das aufzuwickelnde, längsförmige Medium (10) zwischen der zumindest einen Bremsrolle (14a) und dem zumindest einen Gegenstück (14b; 14c) durchgeführt ist und mit der zumindest einen Bremsrolle (14a) und dem zumindest einen Gegenstück (14b) Reibkontakt bildet; und
Umwandeln (S3) einer Bewegungsenergie der zumindest einen Bremsrolle (14a) und der zumindest einen weiteren Bremsrolle (14b) mittels einer mit der zumindest einen Bremsrolle (14a) und der zumindest einen weiteren Bremsrolle (14b) gekoppelten Energierückgewinnungseinrichtung (16a; 16b;
16c; 16d), welche die zumindest eine Bremsrolle (14a) zum Abbremsen des aufzuwickelnden, längsförmigen Mediums (10) mit einem vorgegebenen Bremsmoment beaufschlagt.

11. Verfahren nach Anspruch 10 , **dadurch gekennzeichnet, dass** das längsförmige Medium ein Stahlband ist.

12. Spaltbandanlage (100) zur Längsteilung eines aufzuwickelnden, längsförmigen Mediums (10) mit einer Abwickelhaspel (101), einer Aufwickelhaspel (103) und einer zwischen der Abwickelhaspel (101) und der Aufwickelhaspel (102) angeordneten Bremsvorrichtung (1) nach einem der Ansprüche 1 bis 9.

## Claims

1. Brake device (1) for braking an elongate medium (10) that is to be wound up, having:
a holding device (12) in which at least one braking roller (14a) and at least one counterpart (14b) arranged adjacent to the at least one braking roller (14a) are arranged, wherein the at least one counterpart (14b) arranged in the holding device (12) is formed by at least one further braking roller (14b), wherein the at least one braking roller (14a) and the at least one further braking roller (14b) are rotatably mounted at axial end portions (14a1, 14a2, 14b1, 14b2) in the holding device (12),
wherein the elongate medium (10) that is to be wound up can be led through between the at least one braking roller (14a) and the at least one counterpart (14b) and forms frictional contact with the at least one braking roller (14a) and the at least one counterpart (14b); and
an energy recovery device (16a), in the form of an electrical generator (16a), which is coupled to the at least one braking roller (14a) and to the at least one further braking roller (14b) and which is designed to act on the at least one braking roller (14a) and on the at least one further braking roller (14b) with a predefined braking moment in order to brake the elongate medium (10) that is to be wound up, wherein the at least one braking roller (14a) and the at least one further braking roller (14b) are coupled to the energy recovery device (16a) via a transmission (34),
**characterized in that**
the transmission (34) is formed by a straightening machine transmission and the transmission (34) is coupled by means of a chain drive (38) to the electrical generator (16).

2. Brake device according to Claim 1, **characterized in that** the at least one braking roller (14a) is, for the conversion of kinetic energy into electrical energy, coupled to the electrical generator (16a), wherein the electrical energy generated by the electrical generator can be provided to a first consumer (17a), in particular an electrical consumer, or can be fed into the grid.

3. Brake device according to either one of the preceding claims, **characterized in that** a braking moment generated by the energy recovery device (16a) can be controlled in a variable manner by means of a control device (27), wherein the control device (27) is formed by a mechanical controller or an electrical controller.

4. Brake device according to any one of the preceding claims, **characterized in that**, in the holding device (12), a first braking roller pair (14a, 14b), a second braking roller pair (18a, 18b) and a third braking roller pair (20a, 20b) are arranged so as to be offset with respect to one another in a longitudinal direction of the holding device (12) and adjustable in height, wherein the first braking roller pair (14a, 14b), the second braking roller pair (18a, 18b) and the third braking roller pair (20a, 20b) are adjustable in height from an operational position into a non-operational position.

5. Brake device according to any one of the preceding claims, **characterized in that** a height position of the braking roller (14a) and/or of the further braking roller (14b) is adjustable by means of hydraulic cylinders (22a1, 22a2, 22b1, 22b2, 22c1, 22c2) which are connected to the braking roller (14a) and to the further braking roller (14b) at respective axial end portions (14a1, 14a2, 14b1, 14b2) of said braking roller and further braking roller and which are fastened to the holding device (12) .

6. Brake device according to any one of the preceding claims, **characterized in that** the braking roller (14a) and the further braking roller (14b) have, at the axial end portions (14a1, 14b1), a spline shaft (24a, 24b), wherein the spline shaft (24a) of the braking roller (14a) is connected in positively locking fashion to a spline hub (26a) of a first articulated shaft flange (28a), and the spline shaft (24b) of the further braking roller (14b) is connected in positively locking fashion to a spline hub (26b) of a second articulated shaft flange (28b).

7. Brake device according to Claim 6, **characterized in that** the first articulated shaft flange (28a) is connected to a first articulated shaft (30a) and the second articulated shaft flange (28b) is connected to a second articulated shaft (30b), wherein the first articulated shaft (30a) is connected to a first input shaft (32a) of the transmission (34) and the second articulated shaft (30b) is connected to a second input shaft (32b) of the transmission (34).

8. Brake device according to Claim 7, **characterized in that** the transmission (34) is designed to synchronize a rotational speed of the first braking roller (14a) and of the second braking roller (14b) of the at least one braking roller pair (14a, 14b) and to merge the torque thereof onto a common output shaft (37) of the transmission (34).

9. Brake device according to Claim 7 or 8, **characterized in that** the first articulated shaft (30a) is designed to compensate a height offset of the braking roller (14a) with respect to the first input shaft (32a) of the transmission (34), and wherein the second articulated shaft (30b) is designed to compensate a height offset of the further braking roller (14b) with respect to the second input shaft (32b) of the transmission (34).

10. Method for operating a brake device (1) for braking an elongate medium (10) that is to be wound up according to any one of the preceding claims, having the steps:
providing (S1) the holding device (12) having the at least one braking roller (14a) and the at least one counterpart (14b) in the form of the at least one further braking roller (14b);
arranging (S2) the at least one braking roller (14a) and the at least one counterpart (14b; 14c) such that the elongate medium (10) that is to be wound up is led through between the at least one braking roller (14a) and the at least one counterpart (14b;
14c) and forms frictional contact with the at least one braking roller (14a) and the at least one counterpart (14b); and
converting (S3) kinetic energy of the at least one braking roller (14a) and of the at least one further braking roller (14b) by means of an energy recovery device (16a; 16b; 16c; 16d) which is coupled to the at least one braking roller (14a) and to the at least one further braking roller (14b) and which acts on the at least one braking roller (14a) with a predefined braking moment in order to brake the elongate medium (10) that is to be wound up.

11. Method according to Claim 10, **characterized in that** the elongate medium is a steel strip.

12. Slit strip installation (100) for longitudinally dividing an elongate medium (10) that is to be wound up, having an unwinding reel (101), a winding-up reel (103) and a brake device (1) according to any one of Claims 1 to 9 arranged between the unwinding reel (101) and the winding-up reel (102).

## Revendications

1. Dispositif de freinage (1) destiné à freiner un support allongé (10) à bobiner, ledit dispositif de freinage comprenant :
un moyen de retenue (12) dans lequel sont disposés au moins un rouleau de freinage (14a) et au moins une contre-pièce (14b) disposée de manière adjacente à l'au moins un rouleau de freinage (14a), l'au moins une contre-pièce (14b) disposée dans le moyen de retenue (12) étant formée par au moins un autre rouleau de freinage (14b), et l'au moins un rouleau de freinage (14a) et l'au moins un autre rouleau de freinage (14b) étant montés de manière rotative sur des portions d'extrémité axiales (14a1, 14a2, 14b1, 14b2) dans le moyen de retenue (12), le support allongé (10) à bobiner pouvant être passé entre l'au moins un rouleau de freinage (14a) et l'au moins une contre-pièce (14b) et formant un contact à friction avec l'au moins un rouleau de freinage (14a) et l'au moins une contre-pièce (14b) ; et un moyen de récupération d'énergie (16a) se présentant sous la forme d'un générateur électrique (16a), accouplé à l'au moins un rouleau de freinage (14a) et à l'au moins un autre rouleau de freinage (14b) et conçu pour générer l'au moins un rouleau de freinage (14a) et l'au moins un autre rouleau de freinage (14b) à un couple de freinage spécifié pour freiner le support allongé (10) à bobiner, l'au moins un rouleau de freinage (14a) et l'au moins un autre rouleau de freinage (14b) étant accouplés au moyen de récupération d'énergie (16a) par le biais d'une transmission (34),
**caractérisé en ce que**
la transmission (34) est formée par une transmission de redresseuse et la transmission (34) est accouplée au générateur électrique (16) par un entraînement par chaîne (38) .

2. Dispositif de freinage selon la revendication 1, **caractérisé en ce que**
l'au moins un rouleau de freinage (14a) est accouplé au générateur électrique (16a) pour convertir l'énergie cinétique en énergie électrique, l'énergie électrique générée par le générateur électrique pouvant être mise à disposition d'un premier consommateur (17a), en particulier un consommateur électrique, ou pouvant être injectée dans le réseau.

3. Dispositif de freinage selon l'une des revendications précédentes, **caractérisé en ce qu'**un couple de freinage, généré par le moyen de récupération d'énergie (16a), peut être régulé de manière variable par un moyen de régulation (27), le moyen de régulation (27) étant formé par un régulateur mécanique ou un régulateur électrique.

4. Dispositif de freinage selon l'une des revendications précédentes, **caractérisé en ce que** dans le moyen de retenue (12) une première paire de rouleaux de freinage (14a, 14b), une deuxième paire de rouleaux de freinage (18a, 18b) et une troisième paire de rouleaux de freinage (20a, 20b) sont disposés de manière décalée l'une par rapport à l'autre et réglable en hauteur dans la direction longitudinale du moyen de retenue (12), la première paire de rouleaux de freinage (14a, 14b), la deuxième paire de rouleaux de freinage (18a, 18b) et la troisième paire de rouleaux de freinage (20a, 20b) étant réglables en hauteur d'une position de fonctionnement à une position hors fonctionnement.

5. Dispositif de freinage selon l'une des revendications précédentes, **caractérisé en ce qu'**une position en hauteur du rouleau de freinage (14a) et/ou de l'autre rouleau de freinage (14b) peut être réglée par des vérins hydrauliques (22a1, 22a2, 22b1, 22b2, 22c1, 22c2) fixés au moyen de retenue (12) et reliés au rouleau de freinage (14a) et à l'autre rouleau de freinage (14b) à des portions d'extrémité axiale respectives (14a1, 14a2, 14b1, 14b2) de ceux-ci.

6. Dispositif de freinage selon l'une des revendications précédentes, **caractérisé en ce que** le rouleau de freinage (14a) et l'autre rouleau de freinage (14b) comportent un arbre cannelé (24a, 24b) aux portions d'extrémité axiale (14a1,14b1), l'arbre cannelé (24a) du rouleau de freinage (14a) étant relié par complémentarité de formes à un moyeu cannelé (26a) d'un premier flasque d'arbre articulé (28a) et l'arbre cannelé (24b) de l'autre rouleau de freinage (14b) étant relié par complémentarité de formes à un moyeu cannelé (26b) d'un deuxième flasque d'arbre articulé (28b).

7. Dispositif de freinage selon la revendication 6, **caractérisé en ce que** le premier flasque d'arbre articulé (28a) est relié à un premier arbre articulé (30a) et le deuxième flasque d'arbre articulé (28b) est relié à un deuxième arbre articulé (30b), le premier arbre articulé (30a) étant relié à un premier arbre d'entrée (32a) de la transmission (34) et le deuxième arbre articulé (30b) étant relié à un deuxième arbre d'entrée (32b) de la transmission (34).

8. Dispositif de freinage selon la revendication 7, **caractérisé en ce que** la transmission (34) est conçue pour synchroniser une vitesse de rotation du premier rouleau de freinage (14a) et celle du deuxième rouleau de freinage (14b) de l'au moins une paire de rouleaux de freinage (14a, 14b) et coordonner leur couple à celui d'un arbre de sortie commun (37) de la transmission (34).

9. Dispositif de freinage selon la revendication 7 ou 8, **caractérisé en ce que**
le premier arbre articulé (30a) est conçu pour compenser un décalage en hauteur du rouleau de freinage (14a) par rapport au premier arbre d'entrée (32a) de la transmission (34), et le deuxième arbre articulé (30b) étant conçu pour compenser un décalage en hauteur de l'autre rouleau de freinage (14b) par rapport au deuxième arbre d'entrée (32b) de la transmission (34).

10. Procédé de fonctionnement d'un dispositif de freinage (1) destiné à freiner un support allongé (10) à bobiner selon l'une des revendications précédentes, ledit procédé comprenant les étapes suivantes :
munir (S1) le moyen de retenue (12) de l'au moins un rouleau de freinage (14a) et de l'au moins une contre-pièce (14b) sous la forme de l'au moins un autre rouleau de freinage (14b) ;
disposer (S2) l'au moins un rouleau de freinage (14a) et l'au moins une contre-pièce (14b ; 14c) de manière à faire passer le support allongé (10) à bobiner entre l'au moins un rouleau de freinage (14a) et l'au moins une contre-pièce (14b ; 14c) et à former un contact à friction avec l'au moins un rouleau de freinage (14a) et l'au moins une contre-pièce (14b) ; et
convertir (S3) l'énergie cinétique de l'au moins un rouleau de freinage (14a) et de l'au moins un autre rouleau de freinage (14b) à l'aide d'un moyen de récupération d'énergie (16a ; 16b ; 16c ; 16d) qui est accouplé à l'au moins un rouleau de freinage (14a) et à l'au moins un autre rouleau de freinage (14b) et qui soumet l'au moins un rouleau de freinage (14a) à un couple de freinage spécifié pour freiner le support allongé (10) à bobiner.

11. Procédé selon la revendication 10, **caractérisé en ce que** le support allongé est une bande d'acier.

12. Installation à bande refendue (100) destinée à diviser longitudinalement un support allongé (10) à bobiner, ladite installation comportant un dévidoir (101), une bobineuse (103) et un dispositif de freinage (1) selon l'une des revendications 1 à 9 disposé entre le dévidoir (101) et la bobineuse (102).
